# FASCICULE DE BREVET EUROPEEN

(11) **EP 2 283 555 B1**
(45) Date de publication et mention de la délivrance du brevet: **12.08.2015**
(21) Numéro de dépôt: 09757460.2
(22) Date de dépôt: 29.05.2009
(51) Int. Cl.: H02H 3/30, H02H 1/00

(54) **PROCEDE ET SYSTEME DE PROTECTION DIFFERENTIELLE D'UNE LIAISON ELECTRIQUE DANS UN RESEAU MOYENNE, HAUTE OU TRES HAUTE TENSION**
VERFAHREN UND SYSTEM ZUM DIFFERENTIALSCHUTZ EINER ELEKTRISCHEN VERBINDUNG IN EINEM NETZWERK MIT MITTLERER SPANNUNG, HOHER SPANNUNG ODER SEHR HOHER SPANNUNG
METHOD AND SYSTEM FOR THE DIFFERENTIAL PROTECTION OF AN ELECTRICAL LINK IN A MEDIUM-VOLTAGE, HIGH-VOLTAGE OR VERY HIGH-VOLTAGE NETWORK

(30) Priorité: 02.06.2008 FR 0853610
(43) Date de publication de la demande: 16.02.2011
(73) Titulaire: Areva T&D Protection & Controle, 34970 Lattes (FR); ALSTOM Technology Ltd, 5400 Baden (CH)
(72) Inventeur: MARMONIER, Jean, 34130 Saint Aunes (FR)
(74) Mandataire: Ilgart, Jean-Christophe
(86) Numéro de dépôt international: PCT/EP2009/056590
(87) Numéro de publication internationale: WO 2009/147078

(56) Documents cités:
- JP-A- 8 037 724
- JP-A- 2008 125 251

## Description

### DOMAINE TECHNIQUE

L'invention concerne un procédé et un système de protection différentielle d'une liaison électrique monophasée, biphasée ou triphasée, par exemple une ligne aérienne, un câble ou une liaison aérosouterraine, dans un réseau moyenne tension, haute tension ou très haute tension.

Dans la suite de la description, pour des raisons de simplification de la description, on considère un réseau triphasé de phases A, B et C.

### ÉTAT DE LA TECHNIQUE ANTÉRIEURE

Le document référencé [1] en fin de description décrit un réseau électrique comportant un système de protection différentielle avec des relais de protection situés aux deux extrémités d'un segment de ligne. Des données analogiques (sinusoides des courants entrant dans la liaison) mesurées aux deux extrémités de ce segment sont échantillonnées, codées numériquement, multiplexées et transmises à l'autre extrémité du segment où elles sont décodées et comparées avec les données obtenues localement. Les disjoncteurs en chaque extrémité de la liaison sont déclenchés par les dispositifs en extrémité A et B si la différence entre les données locales et éloignées est supérieure à une valeur déterminée.

Le prélèvement des données électriques, aux deux extrémités du segment de ligne, doit être synchronisé afin de pouvoir détecter tout défaut de fonctionnement, par exemple un courant de court-circuit. Les dispositifs, ou relais, de protection différentielle situés en ces deux extrémités A et B, dialoguent entre eux en s'échangeant mutuellement des informations. Chacun de ces dispositifs utilise un programme de calcul pour comparer, à un instant donné, les données mesurées localement avec les données transmises par l'autre dispositif situé à distance. Ils effectuent ainsi une comparaison entre les données prélevées à une extrémité A avec les données prélevées à l'autre extrémité B. Ils doivent tenir compte du temps de propagation de ces données sur la liaison 7 qui se traduit par un décalage temporel des sinusoïdes de courant.

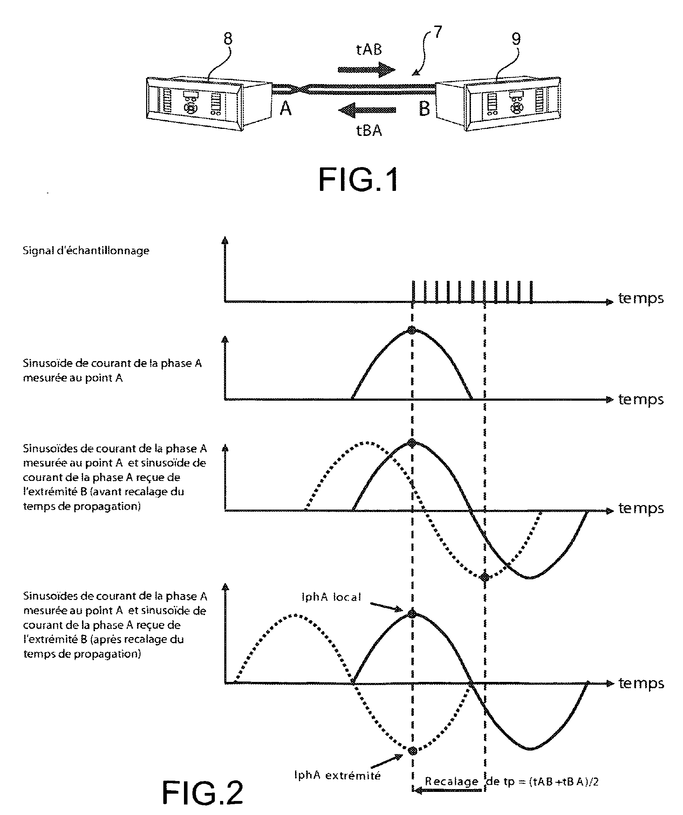

Une première méthode de l'art connu de correction du défaut de synchronisme dû à ce décalage temporel consiste, comme illustré sur la figure 1, à mesurer le temps mis par une des données prélevées grâce à un dispositif 8 situé en l'extrémité A pour parvenir à un dispositif 9 situé l'autre extrémité B située à distance et en revenir, une mesure du temps de propagation tAB de l'extrémité A vers l'extrémité B et du temps de propagation tBA de l'extrémité B vers l'extrémité A n'étant pas possibles du fait du manque de synchronisation défini ci-dessus. On suppose, dans cette première méthode que le temps de propagation tAB et le temps de propagation tBA sont égaux. On décale alors les données reçues de l'extrémité B située à distance de la moitié du temps de propagation aller+retour, soit : tp=(tAB+tBA)/2. Cette première méthode fonctionne bien lorsque le temps de propagation tAB est effectivement égal au temps de propagation tBA, par exemple tAB = tBA = 6 ms ⇒ tp = 6 ms. Un exemple de cette première methode est divulgué par le document JP 2008 125 251.

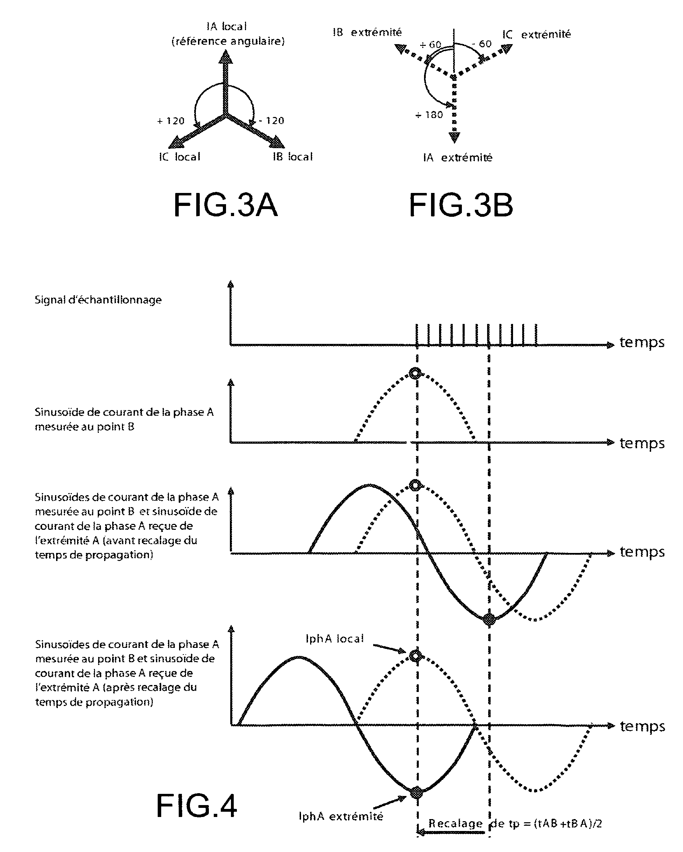

Comme illustré sur les figures 2, 3A et 3B, en cas d'égalité de ces temps de propagation, le recalage de la sinusoïde des courants reçue de l'extrémité B est alors correct pour le dispositif situé en l'extrémité A. La figure 2 illustre une sinusoïde mesurée à l'extrémité A (trait plein) et une sinusoïde reçue de l'extrémité B et recalée du temps tp (pointillés). On obtient sur la partie basse de la figure 2 une parfaite opposition de phase entre ces deux sinusoïdes. Les figures 3A et 3B illustrent les diagrammes de Fresnel des courants IA, IB, IC pour les trois phases A, B et C.

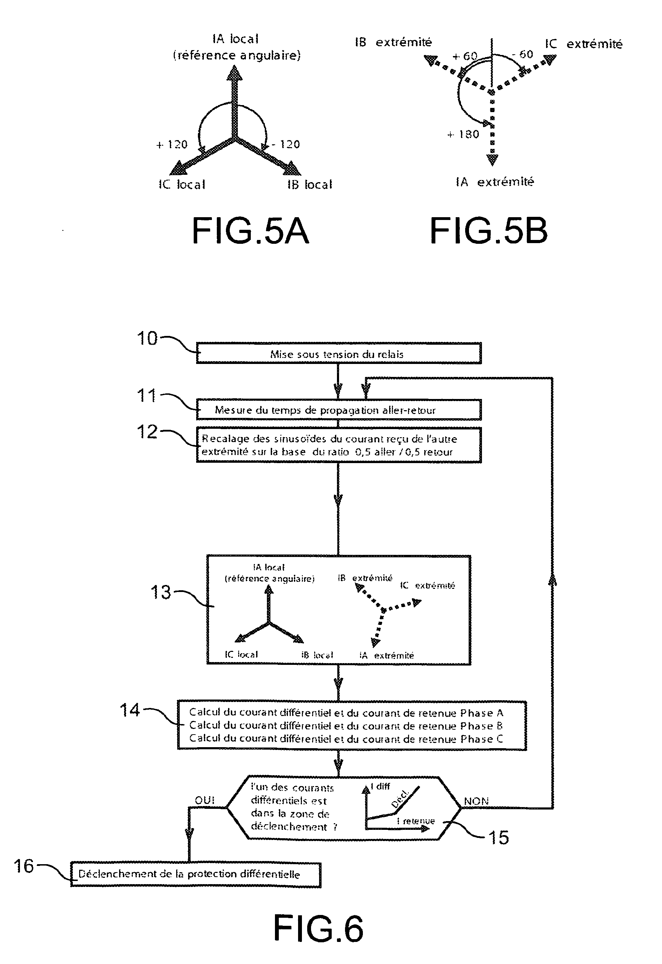

De même, comme illustré sur les figures 4, 5A et 5B, le recalage des sinusoïdes de courant est correct pour le dispositif situé en l'extrémité B : les figures 4, 5A et 5B sont à comparer respectivement aux figures 2, 3A et 3B.

La figure 6 représente un logigramme illustrant un tel fonctionnement des protections différentielles avec cette première méthode de mesure du temps de propagation aller et retour.

Sur cette figure sont ainsi représentées les étapes suivantes :
- mise sous tension du relais (étape 10),
- mesure du temps de propagation aller-retour (étape 11),
- recalage des sinusoïdes du courant reçues de l'autre extrémité sur la base du ratio 0,5 aller/0,5 retour (étape 12),
- obtention des diagrammes de Fresnel des courants (étape 13),
- calcul du courant différentiel et du courant de retenue pour les trois phases A, B et C (étape 14),
- test pour savoir si l'un des courants différentiels est dans la zone de déclenchement (étape 15), avec rebouclage avant l'étape 11 en cas de réponse négative,
- déclenchement de la protection différentielle (étape 16).

Cette première méthode ne fonctionne pas bien lorsque le temps de propagation aller est différent du temps de propagation retour, par exemple si tAB = 4 ms, tBA = 8 ms ⇒ tp = 6 ms.

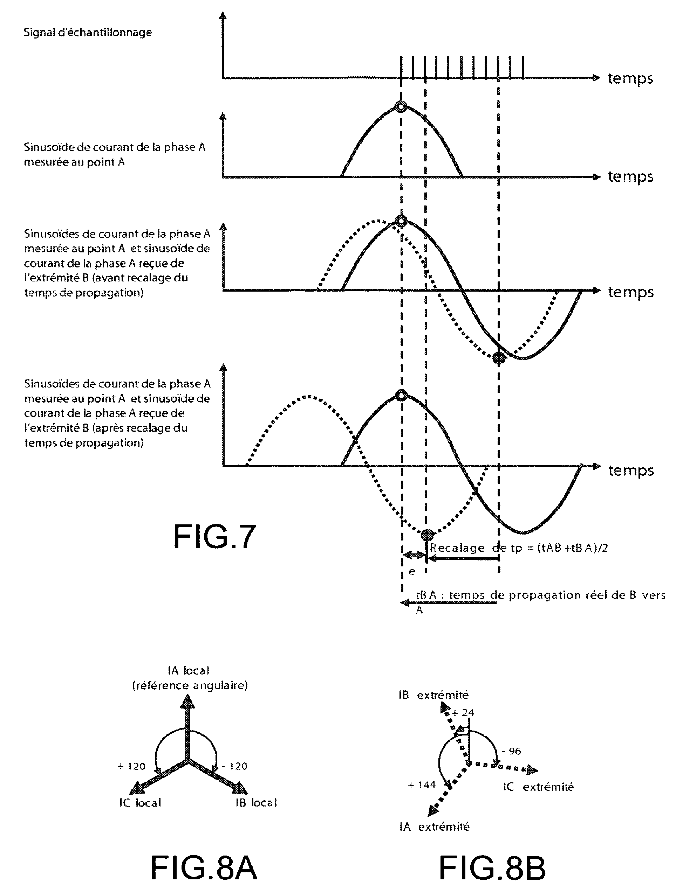

Comme illustré sur les figures 7, 8A et 8B, une erreur de recalage e de la sinusoïde des courants apparaît dans un sens pour le dispositif situé en l'extrémité A. Cette erreur e est de 2 ms, ce qui correspond à un décalage angulaire de -36°.

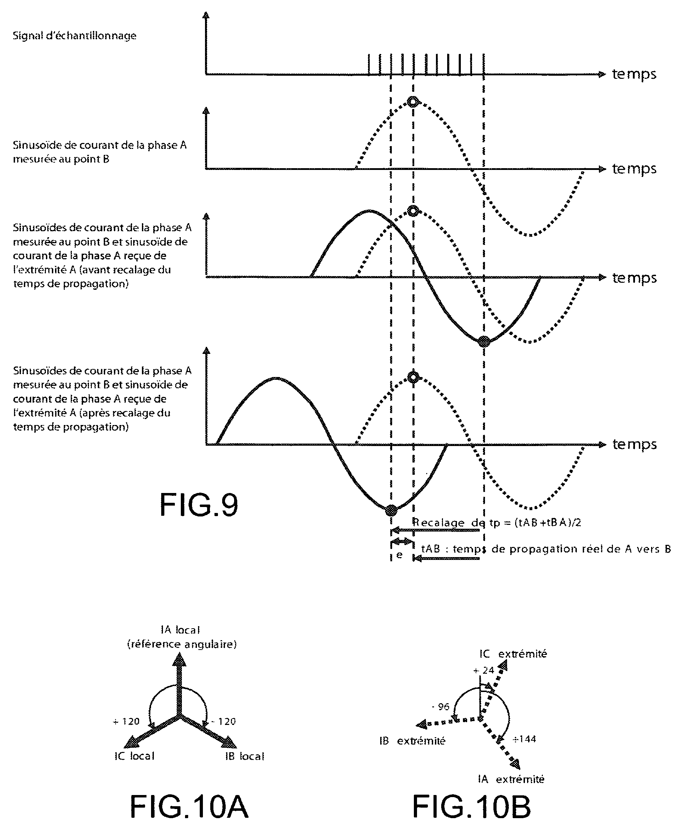

De même, comme illustré sur les figures 9, 10A et 10B, une erreur de recalage de la sinusoïde des courants apparaît dans l'autre sens pour le dispositif 9 situé en l'extrémité B.

Ainsi, en cas de différence entre les temps de propagation aller et retour, est introduite une erreur, qui peut se traduire par un déclenchement intempestif du dispositif de protection pour un défaut extérieur à la liaison ou par un défaut d'alarme pour prévenir l'exploitant d'un problème de communication.

Comme illustré sur les figures 8A, 8B et 10A, 10B, cette erreur se traduit dans le diagramme de Fresnel par un décalage angulaire entre le vecteur du courant mesuré localement et le vecteur du courant reçu de l'autre extrémité et recalé incorrectement. Ce déphasage angulaire est fonction de la différence entre les temps de propagation aller et retour et de la fréquence du réseau.

Pour permettre un fonctionnement correct des dispositifs de protection différentielle en cas d'inégalité entre le temps de propagation aller et le temps de propagation retour, il existe une seconde méthode de correction de l'art connu qui utilise une synchronisation des dispositifs de protection par un équipement externe, par exemple une horloge GPS. Ainsi, un document référencé [2] en fin de description décrit un système de relais de protection dans un système d'alimentation électrique capable d'échantillonner au même moment plusieurs relais qui fonctionnent indépendamment les uns des autres en utilisant un signal provenant d'un satellite GPS, les instants d'échantillonnage étant rendus identiques sans avoir à se soucier des temps de retard de transmission.

Mais cette seconde méthode présente un inconvénient majeur : Une perte de la transmission des informations entre les relais de protection installés sur le réseau électrique et le système GPS conduit à une perte totale de la fonction protection de ce réseau électrique. De plus, cette seconde méthode présente des inconvénients en termes de coût de matériel, d'installation et est susceptible de réduire la disponibilité et la sûreté de fonctionnement de la protection.

L'invention a pour objet de remplacer la synchronisation approximative de la première méthode par une synchronisation par asservissement de l'angle des vecteurs de courant mesurés localement et des vecteurs de courant reçus de la mesure distante non pas sur la base de l'hypothèse d'une égalité entre le temps de propagation aller et le temps de propagation retour mais sur le fait que, en régime nominal, les sinusoïdes de courants mesurées localement et les sinusoïdes de courants reçues de la mesure distante sont obligatoirement synchronisées puisque ces sinusoïdes de courants sont quasiment identiques en amplitude et en phase, et d'effectuer une analyse plus précise pour discriminer les cas de défaut afin d'éviter tout déclenchement intempestif d'un dispositif ou relais de protection.

### EXPOSÉ DE L'INVENTION

L'invention concerne un procédé de protection d'une liaison électrique dans un réseau moyenne, haute ou très haute tension, deux dispositifs de protection différentielle étant disposés aux deux extrémités de cette liaison, caractérisé en ce qu'il comprend les étapes suivantes :
- mise sous tension du relais,
- mesure du temps de propagation aller-retour,
- recalage des sinusoïdes du courant reçu de l'autre extrémité sur la base du ratio 0,5 aller/ 0,5 retour,
- premier test pour savoir si un délai déterminé s'est écoulé,
   1) En cas de réponse négative de ce premier test
      - recalage des sinusoïdes du courant reçu de l'autre extrémité sur la base du ratio 0,5 aller/ 0,5 retour,
      - obtention des diagrammes de Fresnel du courant sans asservissement des phases de l'extrémité,
      - calcul du courant différentiel et du courant de retenue de chaque phase,
      - second test pour savoir si l'un des courants différentiels est dans la zone de déclenchement,
      - déclenchement de la protection différentielle en cas de réponse positive de ce second test.
   2) en cas de réponse positive de ce premier test et en cas de réponse négative du second test
      - test pour comparer le déphasage ΔØ entre le courant local et le courant distant pour chaque phase à au moins une valeur déterminée, et éventuel asservissement de la phase de chaque courant extrémité à 180° par rapport à chaque courant local correspondant.

Avantageusement, dans le premier test, on recherche, dans le cas d'un réseau biphasé ou triphasé, si un déphasage de courant est constaté sur chacune des phases du réseau, la compensation n'étant appliquée qu'après un délai, qui peut être de l'ordre de 100 msec.

Avantageusement, dans le premier test, on recherche si un défaut d'isolement est détecté. On génère une alarme lorsque la compensation atteint un premier niveau déterminé. On génère une seconde alarme et l'on réalise un blocage de la protection lorsque la compensation atteint un second niveau déterminé considéré inacceptable.

L'invention concerne également un système de protection différentielle d'une liaison électrique dans un réseau moyenne, haute ou très haute tension, comprenant deux dispositifs de protection différentielle disposés aux deux extrémités de cette liaison, qui comprend des moyens de resynchronisation de ces dispositifs en décalant les données reçues de l'extrémité située à distance de la moitié du temps de propagation aller+retour, caractérisé en ce qu'il comprend des moyens de compensation automatique par asservissement de l'angle des vecteurs de courant.

Avantageusement, il comprend des moyens de calcul de déphasage de courant sur chacune des phases du réseau, des moyens de prise en compte d'un délai déterminé, par exemple de l'ordre de 100 msec.

Avantageusement, il comprend des moyens de détection d'un défaut d'isolement, des moyens de blocage et des moyens de génération d'une alarme.

Le procédé et le système de l'invention présentent notamment les avantages suivants :
- Ils permettent de réaliser une synchronisation des dispositifs de protection dans le cas où le temps de propagation aller n'est pas égal au temps de propagation retour sans utiliser de système externe de synchronisation.
- Une dégradation du temps de propagation, après une période où le temps de propagation aller identique au temps de propagation retour, se traduit par une compensation permettant de fonctionner de nouveau dans les conditions optimales.
- Ils sont applicables pour les protections différentielles monophasées (comparaison du courant homopolaire mesuré à chaque extrémité), biphasées ou triphasées.

### BRÈVE DESCRIPTION DES DESSINS

La figure 1 illustre une liaison entre un premier dispositif de protection différentielle et un second dispositif de protection différentielle avec un temps de propagation aller tAB et un temps de propagation retour tBA.
Les figures 2, 3A et 3B illustrent un cas où le recalage de la sinusoïde des courants au niveau du premier dispositif de protection différentielle, en appliquant une première méthode de l'art connu, est correct.
Les figures 4, 5A et 5B illustrent un cas où le recalage de la sinusoïde des courants au niveau du second dispositif de protection différentielle en appliquant la première méthode de l'art connu est correct.
La figure 6 représente un logigramme illustrant le fonctionnement d'un dispositif de protection différentielle de l'art connu.
Les figures 7, 8A et 8B illustrent un cas où le recalage de la sinusoïde des courants au niveau du premier dispositif de protection différentielle, en appliquant la première méthode de l'art connu, est erroné.
Les figures 9, 10A et 10B illustrent un cas où le recalage de la sinusoïde des courants au niveau du second dispositif de protection différentielle, en appliquant la première méthode de l'art connu, est erroné.
Les figures 11A, 11B et 11C illustrent le fonctionnement du procédé de l'invention au niveau du premier dispositif de protection différentielle.
Les figures 12A, 12B et 12C illustrent le fonctionnement du procédé de l'invention au niveau du second dispositif de protection différentielle.
La figure 13 représente un logigramme illustrant le fonctionnement du procédé de l'invention.

### EXPOSÉ DÉTAILLÉ DE MODES DE RÉALISATION PARTICULIERS

Le procédé de l'invention consiste à synchroniser les sinusoïdes des courants mesurés localement et les sinusoïdes des courants reçus de l'autre extrémité d'une liaison en réalisant un asservissement des vecteurs courant. En effet, ces sinusoïdes de courants mesurées localement, et ces sinusoïdes de courants reçues d'une mesure à distance sont obligatoirement synchronisées puisqu'elles sont quasiment identiques en amplitude et en phase.

Le procédé de l'invention comprend ainsi les étapes suivantes :
- dans une première étape, on considère des coefficients 50%, 50% entre les temps de propagation aller et retour : on réalise donc la resynchronisation des dispositifs de protection différentielle 8 et 9 selon la première méthode de l'art connu, en décalant les données reçues de l'extrémité située à distance de la moitié du temps de propagation aller+retour ;
- puis, dans une seconde étape, si on constate un déphasage angulaire au niveau des courants de chaque phase après resynchronisation, on corrige ce déphasage en réalisant un asservissement des vecteurs courants IA, IB, IC extrémité à 180° par rapport aux vecteurs courants IA, IB, IC local : on peut avoir, par exemple, des coefficients 40% pour l'aller et 60% pour le retour. On synchronise ainsi les sinusoïdes de courant local et les sinusoïdes de courant distant, puisqu'elles sont, en régime nominal, strictement synchronisées ; le courant à une extrémité de la liaison étant synchrone avec le courant à l'autre extrémité, ceci en négligeant l'effet du courant capacitif de la liaison.

Le procédé de l'invention permet de pallier les inconvénients d'une synchronisation GPS telle qu'utilisée dans la seconde méthode de l'art connu, en remplaçant cette synchronisation GPS par une synchronisation des sinusoïdes de courant sans coût additionnel, disponible à chaque extrémité A et B de la liaison.

Il faut remarquer que cette synchronisation est possible par les courants, mais pas par les tensions du réseau, qui peuvent être déphasées de façon plus significative que les courants entre les deux extrémités A et B d'une liaison.

Afin d'éviter d'appliquer une compensation alors que le déphasage entre le courant mesuré localement et le courant reçu de l'autre extrémité est dû à l'application d'un défaut d'isolement dans le tronçon protégé, on ne réalise cette compensation que si trois conditions sont remplies :
1. une compensation n'est effectuée que si un déphasage du courant d'une même valeur est constaté sur toutes les phases A, B et C du réseau : un défaut qui évolue lentement est dans la grande majorité des cas un défaut sur une seule phase. On note qu'un écart entre temps aller et retour introduit systématiquement un déphasage sur les trois phases.
2. la compensation n'est appliquée qu'après un délai déterminé, par exemple de l'ordre de 100 msec : la compensation n'est pas instantanée pour permettre la détection d'un défaut introduisant un déphasage sur les trois phases A, B et C sans influencer la mesure effectuée.
3. la compensation n'est pas effectuée si un défaut d'isolement est détecté : une méthode classique pour détecter un tel défaut peut consister par exemple à mesurer le courant homopolaire ou le courant inverse.

Ces trois conditions permettent d'éviter d'effectuer une compensation en cas de défaut résistif qui, en évoluant lentement, introduit un déphasage que le dispositif de protection pourrait compenser en permanence au point de réduire la sensibilité de détection.

De plus une constante de temps de l'ordre de grandeur de 0,5 sec est volontairement introduite dans la fonction d'asservissement, ceci afin de ne pas réaliser de compensation en cas de défaut apparaissant sur la liaison.

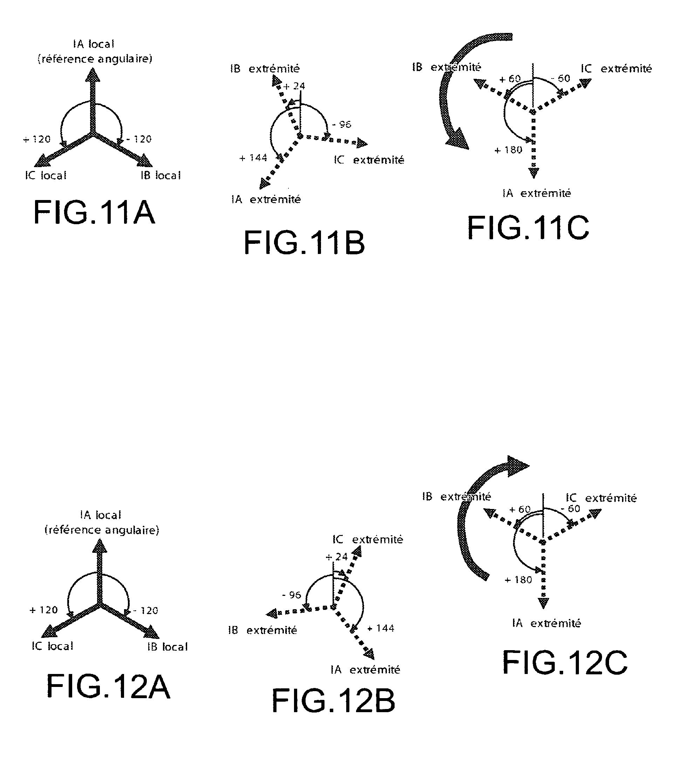

Les figures 11A et 11B (respectivement 12A et 12B) illustrent une erreur d'alignement des vecteurs courant du diagramme de Fresnel due à une différence de temps de propagation au niveau de l'extrémité A (respectivement au niveau de l'extrémité B) et la figure 11C (respectivement 12C) illustre le réalignement des vecteurs obtenus avec le procédé de l'invention.

Lorsque la compensation angulaire nécessaire devient trop importante, le système de protection peut être bloqué (choix de l'opérateur) et une alarme peut être générée (choix de l'opérateur) indiquant à l'exploitant une anomalie trop importante au niveau des temps de propagation.

Le risque de réaliser une compensation angulaire lors de l'apparition d'un déphasage lié à l'apparition d'un défaut très résistant et évoluant, qui puisse nuire à la détection du défaut, est quasiment nul dans le domaine des réseaux haute tension et très haute tension puisque les défauts résistants n'introduisent pas de déphasage angulaire des courants et ne font donc pas intervenir la compensation (réseau à régime de neutre directement à la terre). Par ailleurs, ce risque est éliminé grâce aux trois précautions décrites ci-dessus.

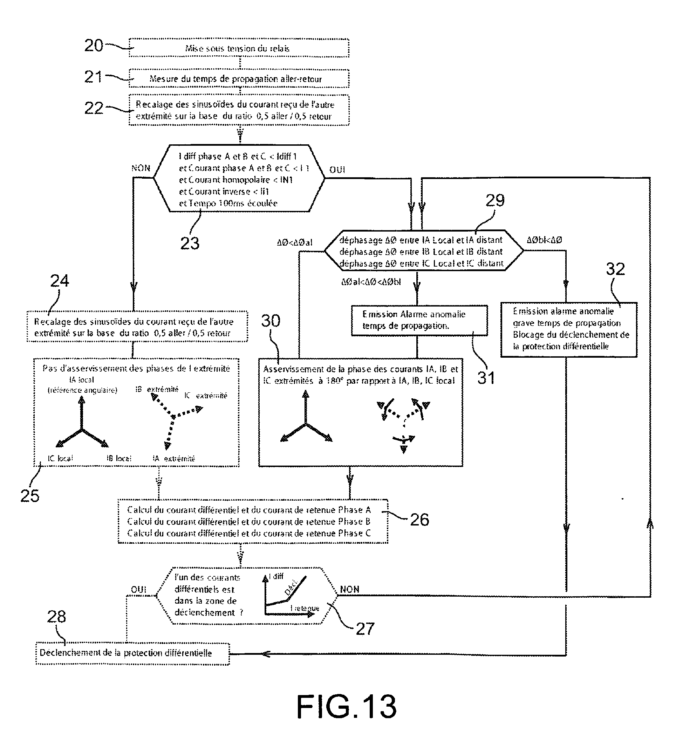

La figure 13 représente un logigramme illustrant le fonctionnement du procédé de l'invention.

Les parties en pointillés correspondent au fonctionnement du dispositif de protection différentielle de l'art connu illustré sur la figure 6.

Sur cette figure sont représentées les étapes suivantes :
- mise sous tension du relais (étape 20),
- mesure du temps de propagation aller-retour (étape 21),
- recalage des sinusoïdes du courant reçu de l'autre extrémité sur la base du ratio 0,5 aller / 0,5 retour (étape 22),
- test pour savoir si les relations suivantes sont vérifiées (étape 23) :
   Idiff phases A, B et C < Idiff 1
   et
   courant phases A, B et C < I1
   et
   courant homopolaire < IN1
   et
   courant inverse < li1
   et
   temporisation 100ms écoulée

### 1) en cas de réponse négative du test 23

- recalage des sinusoïdes du courant reçu de l'autre extrémité sur la base du ratio 0,5 aller/0,5 retour (étape 24),
- obtention des diagrammes de Fresnel du courant sans asservissement des phases de l'extrémité (étape 25),
- calcul du courant différentiel et du courant de retenue des phases A, B et C (étape 26),
- test pour savoir si l'un des courants différentiels est dans la zone de déclenchement (étape 27),
- déclenchement de la protection différentielle en cas de réponse positive (étape 28),

### 2) en cas de réponse positive du test 23

et en cas de réponse négative du test 27
- test pour savoir si le déphasage ΔØ entre I local et I distant pour chacune des phases est inférieur à une valeur ΔØa1, ou à une valeur ΔØb1, ou compris entre ces deux valeurs (étape 29),
   a) si ΔØ < ΔØa1
      - asservissement de la phase des courants IA, IB, et IC extrémités à 180° par rapport à IA, IB, IC local (étape 30) suivi de l'étape 26 ci-dessus,
   b) si ΔØa1 < ΔØ < ΔØb1
      - émission d'une alarme anomalie temps de propagation (étape 31) puis étape 30 d'asservissement ci-dessus,
   c) si ΔØb1 < ΔØ
      - émission d'une alarme anomalie grave temps de propagation, et déblocage du déclenchement de la protection différentielle (étape 32) suivie de l'étape 28 de déclenchement de la protection différentielle.

Les valeurs seuils utilisées sont les suivantes :
- ΔØa1 : un déphasage au-dessus de ce seuil génère une alarme indiquant un écart anormalement élevé entre temps de propagation aller et retour,
- ΔØb1 : un déphasage au-dessus de ce seuil génère une alarme indiquant un écart inacceptable entre temps de propagation aller et retour, et entraine le blocage du déclenchement par élément différentiel.
- Idiff1 : si le courant différentiel (1 Local + 1 extrémité)/2 est au-dessus de ce seuil, l'asservissement des phases des courants reçus de l'autre extrémité n'a pas lieu.
- 11 : si le courant de phase (1 Local) est au-dessus du seuil, l'asservissement des phases des courants reçus de l'autre extrémité n'a pas lieu. Ce critère permet de détecter la présence d'un défaut d'isolement triphasé.
- 1N1 : si le courant résiduel (homopolaire) est au-dessus de ce seuil, l'asservissement des phases des courants reçus de l'autre extrémité n'a pas lieu. Ce critère permet de détecter la présence d'un défaut d'isolement phase-terre.
- li1 : si le courant inverse est au-dessus de ce seuil, l'asservissement des phases des courants reçus de l'autre extrémité n'a pas lieu. Ce critère permet de détecter la présence d'un défaut d'isolement phase-phase.

Les valeurs utilisées dans la description ci-dessus correspondent à des valeurs réellement constatées sur des liaisons. Les temps de propagation sont des temps typiquement rencontrés sur des communications à travers un multiplexeur.

### REFERENCES

[1] US 5 267 231
[2] EP 1 195 876

## Revendications

1. Procédé de protection d'une liaison électrique (7) dans un réseau moyenne, haute ou très haute tension, deux dispositifs de protection différentielle, ou relais, (8, 9) étant disposés aux deux extrémités (A, B) de cette liaison, comprenant les étapes suivantes :
- mise sous tension du relais (étape 20),
- mesure du temps de propagation aller-retour (étape 21),
- recalage des sinusoïdes du courant reçu de l'autre extrémité sur la base du ratio 0,5 aller/ 0,5 retour (étape 22),
ledit procédé **caractérisé en ce qu'**il comprend les étapes suivantes:
- premier test (étape 23) pour savoir si un délai déterminé s'est écoulé,
1) En cas de réponse négative de ce premier test (étape 23)
- recalage des sinusoïdes du courant reçu de l'autre extrémité sur la base du ratio 0,5 aller/ 0,5 retour (étape 24),
- obtention des diagrammes de Fresnel du courant sans asservissement des phases de l'extrémité (étape 25),
- calcul du courant différentiel et du courant de retenue de chaque phase (étape 26),
- second test pour savoir si l'un des courants différentiels est dans la zone de déclenchement (étape 27),
- déclenchement de la protection différentielle en cas de réponse positive (étape 28) de ce second test.
2) en cas de réponse positive de ce premier test (étape 23) et en cas de réponse négative du second test (étape 27)
- test pour comparer le déphasage ΔØ entre le courant local et le courant distant pour chaque phase à au moins une valeur déterminée, et éventuel asservissement de la phase de chaque courant extrémité à 180° par rapport à chaque courant local correspondant (étape 30).

2. Procédé selon la revendication 1, dans lequel, dans le premier test, on recherche, en cas d'un réseau diphasé ou triphasé, si un déphasage de courant est constaté sur chacune des phases du réseau.

3. Procédé selon la revendication 1, dans lequel ce délai déterminé est de l'ordre de 100 msec.

4. Procédé selon la revendication 1, dans lequel, dans le premier test, on recherche si un défaut d'isolement est détecté.

5. Procédé selon la revendication 1, dans lequel on génère une alarme lorsque la compensation atteint un premier niveau déterminé.

6. Procédé selon la revendication 1, dans lequel on génère une alarme et l'on bloque la protection lorsque la compensation atteint un second niveau déterminé.

7. Système de protection d'une liaison électrique (7) dans un réseau moyenne, haute ou très haute tension, comprenant deux dispositifs de protection différentielle, ou relais,(8, 9) disposés aux deux extrémités (A, B) de cette liaison, et comprenant:
- des moyens de mise sous tension du relais,
- des moyens de mesure du temps de propagation aller-retour,
- des moyens de recalage des sinusoïdes du courant reçu de l'autre extrémité sur la base du ratio 0,5 aller/ 0,5 retour, **caractérisé en ce qu'**il comprend:
- des premiers moyens de test pour savoir si un délai déterminé s'est écoulé,
- des moyens d'obtention des diagrammes de Fresnel du courant sans asservissement des phases de l'extrémité,
- des moyens de calcul du courant différentiel et du courant de retenue de chaque phase,
- des seconds moyens de test pour savoir si l'un des courants différentiels est dans la zone de déclenchement,
- des moyens de déclenchement de la protection différentielle,
- des moyens de test pour comparer le déphasage ΔØ entre le courant local et le courant distant pour chaque phase à au moins une valeur déterminée, et d'asservissement de la phase de chaque courant extrémité à 180° par rapport à chaque courant local correspondant.

8. Système selon la revendication 7, comprenant des moyens de calcul du déphasage de courant sur chacune des phases du réseau.

9. Système selon la revendication 7, comprenant des moyens de prise en compte d'un délai déterminé.

10. Système selon la revendication 9, dans lequel ce délai déterminé est de l'ordre de 100 msec.

11. Système selon la revendication 7, comprenant des moyens de détection d'un défaut d'isolement, des moyens de blocage et des moyens de génération d'une alarme.

## Patentansprüche

1. Verfahren zum Schutz einer elektrischen Verbindung (7) in einem Netz mit mittlerer, hoher oder sehr hoher Spannung, wobei zwei Vorrichtungen zum Differentialschutz bzw. Relais (8, 9) an den beiden Enden (A, B) dieser Verbindung angeordnet sind, umfassend die nachfolgenden Schritte:
- Anlegen einer Spannung an das Relais (Schritt 20),
- Messen der Hin- und Rückweglaufzeit (Schritt 21),
- Nachstellen der Sinuskurven des vom anderen Ende empfangenen Stroms auf Grundlage des Verhältnisses 0,5 Hinweg/0,5 Rückweg (Schritt 22),
wobei das Verfahren **dadurch gekennzeichnet ist, dass** es folgende Schritte umfasst:
- einen ersten Test (Schritt 23), um zu erfahren, ob eine bestimmte Zeitspanne abgelaufen ist,
1) bei negativer Antwort auf diesen ersten Test (Schritt 23)
- Nachstellen der Sinuskurven des vom anderen Ende empfangen Stroms auf Grundlage des Verhältnisses 0,5 Hinweg/0,5 Rückweg (Schritt 24),
- Erhalten von Fresnel-Diagrammen des Stroms ohne Regelung der Phasen von dem Ende (Schritt 25),
- Berechnen des Differentialstroms und des Haltestroms für jede Phase (Schritt 26),
- einen zweiten Test, um zu erfahren, ob einer der Differentialströme in dem Auslösebereich liegt (Schritt 27),
- Auslösen des Differentialschutzes bei einer positiven Antwort (Schritt 28) auf diesen zweiten Test.
2) Bei positiver Antwort auf diesen ersten Test (Schritt 23) und bei negativer Antwort auf den zweiten Test (Schritt 27),
- Test zum Vergleichen der Phasenverschiebung ΔØ zwischen dem lokalen Strom und dem entfernten Strom für jede Phase mit zumindest einem bestimmten Wert und gegebenenfalls Regeln der Phase eines jeden End-stroms auf 180° bezüglich eines jeden entsprechenden lokalen Stroms (Schritt 30).

2. Verfahren nach Anspruch 1, wobei bei dem ersten Test im Falle eines Zwei- oder Drei-Phasennetzes untersucht wird, ob eine Phasenverschiebung des Stroms an jeder der Phasen des Netzes festzustellen ist.

3. Verfahren nach Anspruch 1, wobei diese bestimmte Zeitspanne in der Größenordnung von 100 ms liegt.

4. Verfahren nach Anspruch 1, wobei bei dem ersten Test untersucht wird, ob ein Isolationsfehler festzustellen ist.

5. Verfahren nach Anspruch 1, wobei ein Alarm dann erzeugt wird, wenn die Kompensation ein bestimmtes erstes Niveau erreicht.

6. Verfahren nach Anspruch 1, wobei ein Alarm dann erzeugt wird und der Schutz dann gesperrt wird, wenn die Kompensation ein bestimmtes zweites Niveau erreicht.

7. System zum Schutz einer elektrischen Verbindung (7) in einem Netz mit mittlerer, hoher oder sehr hoher Spannung, enthaltend zwei Vorrichtungen zum Differentialschutz bzw. Relais (8, 9), die an den beiden Enden (A, B) dieser Verbindung angeordnet sind, und umfassend:
- Mittel zum Anlegen einer Spannung an das Relais,
- Mittel zum Messen der Hin- und Rückweglaufzeit,
- Mittel zum Nachstellen der Sinuskurven des vom anderen Ende empfangen Stroms auf Grundlage des Verhältnisses 0,5 Hinweg/0,5 Rückweg, **dadurch gekennzeichnet, dass** es umfasst:
- erste Testmittel, um zu erfahren, ob eine bestimmte Zeitspanne abgelaufen ist,
- Mittel zum Erhalten von Fresnel-Diagrammen des Stroms ohne Regelung der Phasen von dem Ende,
- Mittel zum Berechnen des Differentialstroms und des Haltestroms für jede Phase,
- zweite Testmittel, um zu erfahren, ob einer der Differentialströme in dem Auslösebereich liegt,
- Mittel zum Auslösen des Differentialschutzes,
- Testmittel zum Vergleichen der Phasenverschiebung ΔØ zwischen dem lokalen Strom und dem entfernten Strom für jede Phase mit zumindest einem bestimmten Wert und zum Regeln der Phase eines jeden Endstroms um 180° bezüglich eines jeden entsprechenden lokalen Stroms.

8. System nach Anspruch 7, umfassend Mittel zum Berechnen der Phasenverschiebung des Stroms an jeder der Phasen des Netzes.

9. System nach Anspruch 7, umfassend Mittel zum Berücksichtigen einer bestimmten Zeitspanne.

10. System nach Anspruch 9, wobei diese bestimmte Zeitspanne in der Größenordnung von 100 ms liegt.

11. System nach Anspruch 7, umfassend Mittel zum Erfassen eines Isolationsfehlers, Mittel zum Sperren und Mittel zum Erzeugen eines Alarms.

## Claims

1. A method of protecting an electrical link (7) in a medium, high, or very high voltage network, in which two differential protection devices, or relays, (8, 9) are disposed at the two ends (A, B) of said link, including the following steps:
· apply a voltage to the relay (step 20);
· measure the outward-and-return propagation time (step 21);
· phase shift the sinusoidal curves of the current received from the far end, on the basis of the ratio 0.5 outward/ 0.5 return (step 22);
said method being **characterized in that** it comprises the following steps:
· first test (step 23) to find out whether a determined time has elapsed;
1) If result of this first test is negative (step 23)
· phase shift the sinusoidal curves of the current received from the far end, on the basis of the ratio 0.5 outward/ 0.5 return (step 24);
· obtain Fresnel diagrams for the current without servocontrolling the phases at the far end (step 25);
· calculate the differential current and the retained current for each phase (step 26);
· second test to find out whether one of the differential currents is in the trip zone (step 27);
· trip the differential protection apparatus if result of this second test is positive (step 28);
2) If result of this first test is positive (step 23) and if result of the second test is negative (step 27) :
· Test to compare the phase difference ΔØ between the locally measured current and the current measured remotely, for each phase, with at least one determined value, and optional servocontrol of the phase of each end current at 180° relative to each corresponding local current (step 30).

2. A method according to claim 1 for a two-phase or three-phase network, wherein the first test serves to find out whether the current in each of the phases of the network is found to be out of phase.

3. A method according to claim 1, wherein the predetermined time delay is of the order of 100 ms.

4. A method according to claim 1, wherein the first test serves to find out whether an insulation fault is detected.

5. A method according to claim 1, wherein an alarm is generated if said compensation reaches a first predetermined level.

6. A method according to claim 1, wherein an alarm is generated and the protection apparatus is blocked when the compensation reaches a second predetermined level.

7. Differential protection apparatus for an electrical link (7) in a medium, high, or very high voltage network, said apparatus including two differential protection devices, or relays, (8, 9) disposed at respective ends (A, B) of said link, and comprising:
· means for applying a voltage to the relay;
· means for measuring the outward and return propagation times;
· means for phase shifting the curves of the current received from the far end on the basis of the ratio of 0.5 outward 0.5 return;
**characterized in that** it comprises:
· first test means to find out whether a determined time has elapsed;
· means for obtaining Fresnel diagrams for the current without servocontrolling the phases at the far end;
· means for calculating the differential current and the retained current for each phase;
· second test means to find out whether one of the differential currents is in the trip zone;
· means for triping the differential protection;
· test means to compare the phase difference ΔØ between local current and remote current for each phase, with at least one determined value and to servocontrol the phase of each remote current so as to be 180° relative to each corresponding local current.

8. Apparatus according to claim 7, further including means for calculating the phase difference between the currents on each phase of said network.

9. Apparatus according to claim 7, further including means for taking a predetermined time delay into account.

10. Apparatus according to claim 9, wherein said predetermined time delay is of the order of 100 ms.

11. Apparatus according to claim 7, further including means for detecting an insulation fault, together with blocking means and means for generating an alarm.
